Europäisches Patentamt

European Patent Office

Office européen des brevets

(11) Publication number: **0 246 919 B1**

## EUROPEAN PATENT SPECIFICATION

(45) Date of publication of patent specification: **22.01.92** (51) Int. Cl.5: **G11B 7/09**

(21) Application number: **87304586.8**

(22) Date of filing: **22.05.87**

(54) **Tracking servo device for data reading device.**

(30) Priority: **23.05.86 JP 77631/86 U**

(43) Date of publication of application:
**25.11.87 Bulletin 87/48**

(45) Publication of the grant of the patent:
**22.01.92 Bulletin 92/04**

(84) Designated Contracting States:
**DE FR GB NL**

(56) References cited:
**EP-A- 0 011 990**
**US-A- 4 481 550**

**PATENT ABSTRACTS OF JAPAN, vol. 8, no.
65 (P.263)[1502], 27th March 1984, & JP - A -
58 211 370 (PIONEER K.K.) 08-12-1983**

(73) Proprietor: **PIONEER ELECTRONIC CORPORA-
TION
No. 4-1, Meguro 1-chome
Meguro-ku Tokyo 153(JP)**

(72) Inventor: **Konno, Yoshikiyo Pioneer Electronic
Corp.
Tokorozawa Works 2610, Hanazono 4-chome
Tokorozawa-shi Saitama(JP)**

(74) Representative: **Jackson, Peter Arthur et al
Gill Jennings & Every, 53-64 Chancery Lane
London WC2A 1HN(GB)**

## Description

This invention relates to a tracking servo device in a data reading device.

An example of such a tracking servo device is disclosed in JP-A-58.211.370.

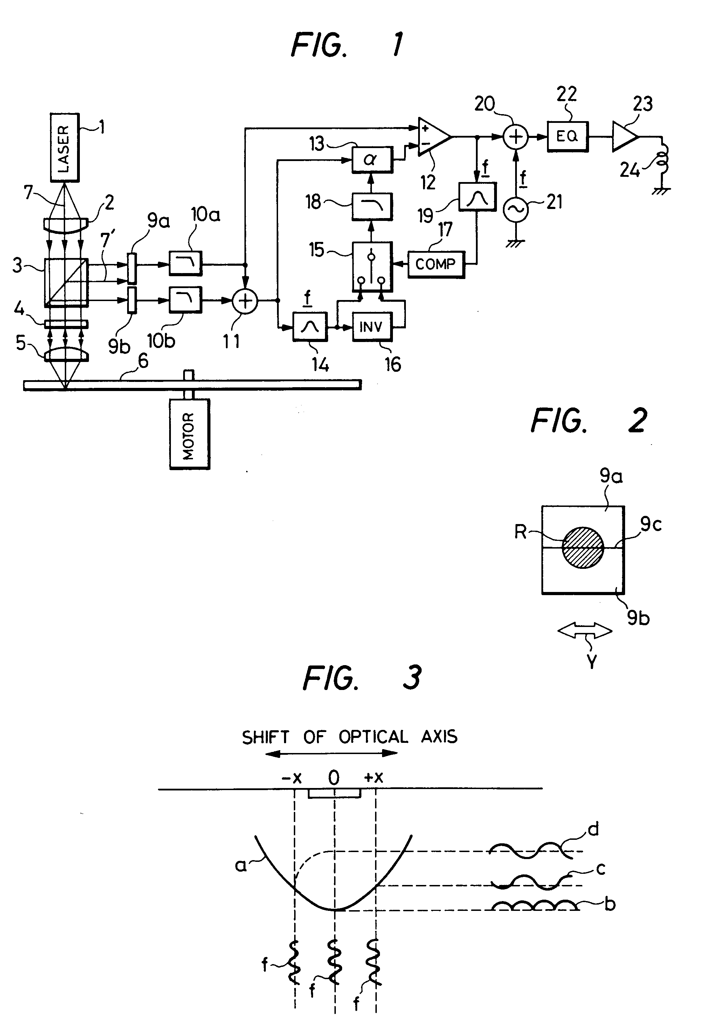

Another example of a conventional tracking servo device in an optical data reading device is as shown in Fig. 1. In Fig. 1, a laser beam from a laser beam source 1 is applied through a lens 2, a beam splitter 3, a 1/4 wavelength plate 4 and an objective lens 5 to the recording surface of a recording disk 6. Concentrated by the objective lens 5, the laser beam forms a pickup light spot, namely, a minute data detection point on the recording surface of the recording disk 6. The laser beam reflected from (or passed through) the recording disk 6 is split by the beam splitter 3 and applied to the light receiving surfaces of a set of photo-electric conversion elements 9a and 9b. The outputs of the photo-electric conversion elements 9a and 9b are supplied respectively through LPFs. (low pass filters) 10a and 10b to an adder 11. The filtered output of the photo-electric conversion element 9a is further supplied to one input terminal of a differential amplifier 12.

The output of the adder 11 is applied to the other input terminal of the differential amplifier 12 through a variable gain amplifier 13. The output of the adder 11 is further applied through a BPF (band-pass filter) 14 to one input terminal of a change-over switch 15 and to an inversion amplifier 16, the output of which is supplied to the other input terminal of the change-over switch 15. The change-over switch 15 switches one of the two inputs to its output in response to a control input signal. The output of the change-over switch 15 is smoothed by an LPF 18 and applied, as a control input, to the variable gain amplifier 13.

The output of the differential amplifier 12 is applied through a BPF 19 to a comparator 17. The output of the differential amplifier 12 is further applied to an adder 20, where it is added to the output of an oscillator 21. The output of the adder 20 is supplied through an equalizer 22 to a drive amplifier 23, thus providing a drive signal for a drive coil 24 to move the objective lens 5 in a direction perpendicular to the recording track.

The photo-electric conversion elements 9a and 9b are combined together as shown in Fig. 2. More specifically, the elements 9a and 9b are joined together in such a manner that their light receiving surfaces have one border line 9c (or division line) therebetween, which is in parallel with the tangential direction of a recording track (as indicated by the arrow Y). The elements 9a and 9b are symmetrical with respect to an optical axis 7' of the reflection beam of the light spot. In Fig. 1 is shown an incident optical axis 7 of the laser beam.

When, in the tracking servo device thus organized, the center of the pickup light spot is shifted in a direction perpendicular to the recording track from the recording track center, the intensity distributions of light applied to the photo-electric conversion elements 9a and 9b become asymmetrical according to the shift. Accordingly, the outputs of the photo-electric conversion elements 9a and 9b assume different levels from each other. In this connection, the output B of the differential amplifier 12 can be represented by the following equation (1):

$$B = (1 - \alpha)A_1 - \alpha A_2 \qquad (1)$$

where $A_1$ and $A_2$ are the outputs of the photo-electric conversion elements 9a and 9b, respectively, and $\alpha$ is the gain of the variable gain amplifier 13.

Accordingly, when the gain $\alpha$ is set to a suitable value, then the difference in low frequency component between the outputs of the photo-electric conversion elements 9a and 9b can be obtained. That is, a so-called "tracking error signal" can be obtained. The tracking error signal is utilized to move the objective lens 5 in a direction perpendicular to the recording track thereby to deflect the pickup light spot until the light spot center is positioned at the recording track center. That is, a tracking control operation is carried out using the tracking error signal.

A disturbance or dither signal f having a predetermined frequency produced by the oscillator 21 is added to the tracking error signal, so that the pickup light spot is deflected according to the disturbance signal f.

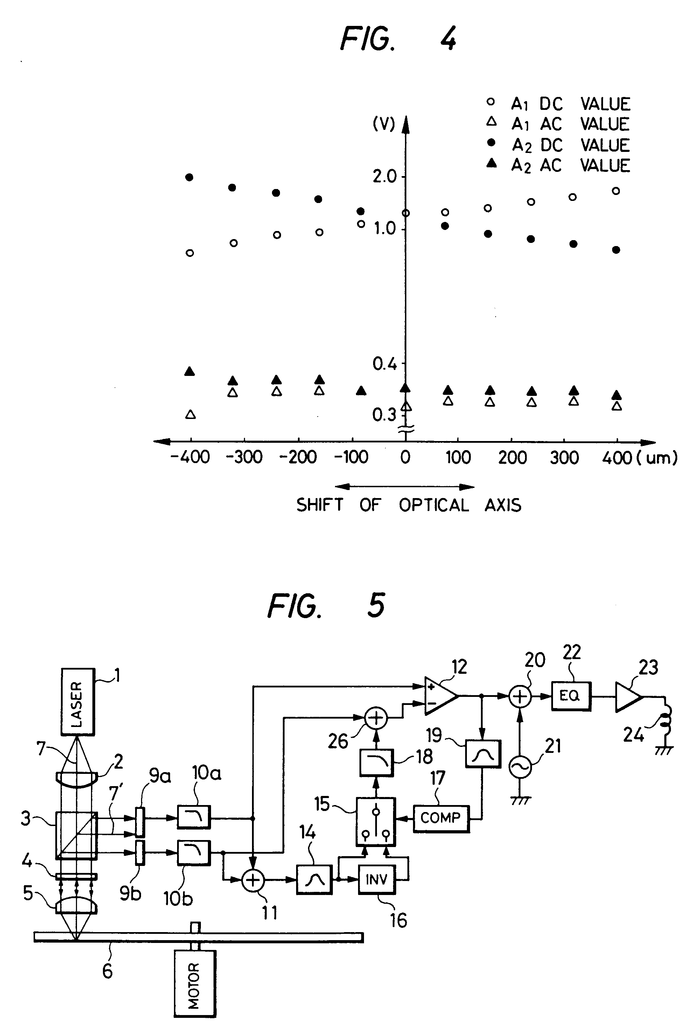

In the case where the servo loop is open, the sum of the output levels of the photo-electric conversion elements 9a and 9b changes with the shift of the optical axis as indicated by the solid line a in Fig. 3. That is, when the optical axis is not shifted at all and the light spot center is at the center of the recording track, the sum of the output levels of the photo-electric conversion elements 9a and 9b is a minimum. Therefore, when the optical axis is exactly centered on the track, the sum signal ($A_1 + A_2$) outputted by the adder 11 does not contain the fundamental frequency of the dither signal f but only higher order components. The dominant dither component at the output of the adder 11 is at twice the predetermined frequency of the dither signal f, as shown by the solid line b in Fig. 3. Only when the optical axis is shifted significantly from the center of the track, is there a significant dither component at the output of the adder 11 at the fundamental frequency of the adder 11. The further the pickup light spot is from the center of the track, the larger is the magnitude of the fundamental component. If, when the optical axis is shifted as much as $+x$, and the light spot center is spaced by $|x|$, for instance inwardly, from the center of the recording track, the introduction of the dither signal $f$ occurs, then the sum signal $(A_1 + A_2)$ remains in phase with the dither signal $f$ as indicated by the solid line c. If the dither signal $f$ is introduced into the servo loop when the optical axis is shifted by $-x$, and the light spot center is spaced by $|x|$, for instance outwardly, from the center of the recording track, then the sum signal $(A_1 + A_2)$ has opposite phase to that of the dither signal $f$ as shown by the solid line d in Fig. 4.

The BPFs 14 and 19 have a frequency characteristic to selectively pass only signal components which are equal in frequency to the dither signal $f$. Therefore, the dither signal component which is extracted from the output of the differential amplifier 12 is supplied to the comparator 17, where it is compared, for instance, with the ground level. As a result, the comparator 17 outputs a square wave signal whose level rises for every positive half cycle of the dither signal component and falls for every negative half cycle. The square wave signal operates the change-over switch 15. Therefore, when the optical axis shift is zero (0), the switch 15 outputs a signal in phase with the dither signal $f$. However, as noted before, there is no fundamental component of the dither signal to be passed by the filter 14 when the optical shift is zero. Accordingly, the switch outputs a zero-level signal. When the optical axis shift is $+x$, the switch 15 outputs a signal which is in phase with the dither signal $f$ for every positive half cycle of the dither signal $f$, and a signal which is opposite in phase to the dither signal $f$ for every negative half cycle of the dither signal. That is, for an optical shift of $+x$, the switch 15 outputs a positive full-wave rectified dither component. On the other hand, when the optical axis shift is $-x$, the switch 15 outputs a signal which is opposite in phase to the dither signal $f$ for every positive half cycle of the dither $f$, and a signal which is in phase with the dither signal $f$ for every negative half cycle. That is, for an optical shift of $-x$, the output of the switch 15 is a negative full-wave rectified dither component. The outputs of the change-over switch 15 are smoothed by the LPF 18, thus providing DC signals whose levels correspond to the amounts and directions of shift of the optical axis. As the DC signals are supplied, as control signals, to the variable gain amplifier 13, the gain $\alpha$ of the amplifier 13 changes with the shift of the optical axis to move the light spot center to the center of the recording track.

When the tracking servo is open, the levels of the DC components of the outputs $A_1$ and $A_2$ of the photo-electric conversion elements 9a and 9b change in proportion to the shift of the optical axis as indicated by the white and black circular points in Fig. 4, whereas the levels of the AC components of the outputs $A_1$ and $A_2$ are maintained substantially unchanged irrespective of the shift of the optical axis as indicated by the white and black triangular points. Therefore, as the gain $\alpha$ of the variable gain amplifier 13 changes, the levels of the DC and AC components of the sum signal $A_1 + A_2$ both change, as a result of which the output of the differential amplifier 12 includes an AC component independently of the shift of the light spot. Accordingly, the conventional tracking servo device suffers from a difficulty that it is impossible to obtain an accurate tracking error signal, and accordingly it is impossible to perform the tracking control operation with high accuracy.

Accordingly, an object of this invention is to provide a tracking servo device in which the shift of the optical axis is corrected so that the tracking control operation is carried out with high accuracy.

There is provided a tracking device for following a track, comprising a pickup for transmitting an incident signal upon and for receiving a resultant signal from a medium containing a track; means for moving the pickup relative to the track according to a driving signal generated in a tracking servo loop receiving the resultant signal; detecting means receiving the resultant signal for providing one pair of detection outputs having a difference in levels varying according to an amount of deflection of the pickup from the track; and sum means for forming a sum signal corresponding to a sum of the levels of the pair of outputs; disturbance introducing means for introducing a disturbance signal of predetermined frequency into the driving signal; and disturbance extraction means for extracting a component of the sum signal having a fixed relation to the predetermined frequency of the disturbance signal to produce an offset signal having a level varying with the deflection of the pickup; and, according to the present invention such a device is characterised by means for adding the offset signal and a difference in level between the pair of detection outputs to produce a signal from which the driving signal is derived.

In the accompanying drawings:

Fig. 1 is a block diagram showing a conventional tracking servo device.

Fig. 2 is an explanatory diagram showing photo detectors with a light space.

Fig. 3 is a graphical representation indicating the sums of the outputs $A_1$ and $A_2$ of photo-electric conversion elements 9a and 9b provided when the optical axis is shifted.

Fig. 4 is a graphic representation indicating the variations in level of the components in the

outputs $A_1$ and $A_2$ of the photo-electric conversion elements $A_1$ and $A_2$ with the deflections of the optical axis.

Fig. 5 is a block diagram showing one embodiment of this invention.

One embodiment of this invention will be described with reference to Fig. 5 in detail.

In Fig. 5, a laser beam source 1, a lens 2, a beam splitter 3, a 1/4 wavelength plate 4 and an objective lens 5 are arranged in the same manner as in the case of the conventional tracking servo device described with reference to Fig. 1. They operate to form a light spot on the recording surface of a recording disk 6. The laser beam reflected from the recording surface is applied to the light receiving surfaces of photo-electric conversion elements 9a and 9b. The photo-electric conversion elements 9a and 9b, LPFs 10a and 10b, adders 11 and 20, a differential amplifier 12, BPFs 14 and 19, a change-over switch 15, an inversion amplifier 16, a comparator 17, an oscillator 21, an equalizer 22, a drive amplifier 23, and a drive coil 24 are connected in the same manner as in the case of the conventional tracking servo device shown in Fig. 1. However, it should be noted that, in the embodiment of the invention, the output of the LPF 10b is applied to the adder 11 and to another adder 26, where it is added to the output of the LPF 18 receiving the dither output of the switch 15. Also, the output of the first adder 11 is supplied only to the BPF 14 and the output of the additional adder 26 is supplied to the other input terminal of the differential amplifier 12.

In the tracking servo device thus organized, similarly as in the device of Fig. 1, the output of the change-over switch 15 is converted by the LPF 18 into a correction signal $\beta$ whose level corresponds to the shift magnitude and direction of the optical axis. The correction signal $\beta$ is added to the output $A_2$ of the photo-electric conversion element 9b which has passed through the LPF 10b. Therefore, the output B of the differential amplifier 12 can be expressed as follows:

$$B = A_1 - A_2 - \beta \qquad (2)$$

Thus, the DC variation component induced in the tracking error signal by the shift of the optical axis is eliminated, and the AC components are not affected at all. Accordingly, the AC components formed depend directly on the deflection of the light spot, so that accurate tracking error signals can be obtained at all times.

In the above-described embodiment, the correction signal $\beta$ outputted by the LPF 18 is supplied directly to the adder 26, where it is added to the output $A_2$. However, the correction signal $\beta$ may be supplied through an amplifier to the adder 26; that is, it may be added to the output $A_2$ after being amplified.

Further, in the above-described embodiment, the correction signal B is added to the output A2 of the photo-electric conversion element 9b. However, it may be added to the output A1 of the photo-electric conversion element 9a. Also, the device of the present invention may be so arranged that the correction signal $\beta$ is added through an amplifier to the output of the differential amplifier 12.

As was described above, in the tracking servo device of the invention, the dither signal is introduced into the servo loop having one pair of detection outputs which provide the level difference according to the deflection of the data detecting point from the recording track. According to the instantaneous level of the dither signal component in the difference signal corresponding to the difference in level between one pair of detection outputs, the component, which is equal in frequency to the dither signal, of the sum signal corresponding to the sum of the pair of detection outputs is inverted to form the correction signal corresponding to the direction and magnitude of the detracking caused by the shift of the optical axis. The correction signal is added to one of the pair of detection outputs. Accordingly, in the invention, only the variation of the DC component in the tracking error signal induced by the deflection of the optical axis is corrected, and the AC component indicating the detracking data, i.e., the error of the track following operation of the data detecting point is not affected at all. Therefore, the tracking control operation is performed with high accuracy at all times.

## Claims

1. A tracking device for following a track, comprising a pickup (1-5) for transmitting an incident signal upon and for receiving a resultant signal from a medium (6) containing a track; means for moving the pickup (1-5) relative to the track according to a driving signal generated in a tracking servo loop receiving the resultant signal; detecting means (9a, 9b) receiving the resultant signal for providing one pair of detection outputs having a difference in levels varying according to an amount of deflection of the pickup from the track; and sum means (11) for forming a sum signal corresponding to a sum of the levels of the pair of outputs; disturbance introducing means (20) for introducing a disturbance signal (21) of predetermined frequency into the driving signal; and disturbance extraction means (14, 19) for extracting a component of the sum signal having a fixed relation to the predetermined frequency of the disturbance signal to produce an offset signal having a level varying with the deflection of the pickup (1-5); characterised by means (26) for adding the offset signal and a difference in level between the pair of detection outputs to produce a signal from which the driving signal is derived.

2. A tracking device according to claim 1, wherein the disturbance extraction means (14, 19) includes means (16) for inverting at least a component of the sum signal according to an instantaneous level of a component of an output of the adding means (26) having the predetermined frequency.

3. A tracking device according to claim 1 or claim 2, wherein the pickup (1-5) transmits and receives optical signals.

## Revendications

1. Dispositif de suivi de piste pour suivre une piste, comprenant un capteur (1-5) pour transmettre un signal incident qui arrive sur un support qui contient une piste et pour recevoir un signal résultant (6) qui provient de ce support ; un moyen pour déplacer le capteur (1-5) par rapport à la piste en fonction d'un signal de commande généré dans une boucle d'asservissement de suivi de piste qui reçoit le signal résultant ; un moyen de détection (9a, 9b) qui reçoit le signal résultant pour fournir une paire de sorties de détection qui ont une différence de niveaux variant en fonction d'une valeur de déviation du capteur par rapport à la piste ; et un moyen de somme (11) pour former un signal de somme qui correspond à une somme des niveaux de la paire de sorties ; un moyen d'introduction de perturbation (20) pour introduire un signal de perturbation (21) d'une fréquence prédéterminée dans le signal de commande ; et un moyen d'extraction de perturbation (14, 19) pour extraire une composante du signal de somme qui a une relation fixe par rapport à la fréquence prédéterminée du signal de perturbation afin de produire un signal de décalage qui a un niveau qui varie avec la déviation du capteur (1-5) ; caractérisé par des moyens (26) pour ajouter le signal de décalage et une différence en niveau entre la paire de sorties de détection afin de produire un signal à partir duquel le signal de commande est dérivé.

2. Dispositif de suivi de piste selon la revendication 1, dans lequel le moyen d'extraction de perturbation (14, 19) inclut un moyen (16) pour inverser au moins une composante du signal de somme en fonction d'un niveau instantané d'une composante d'une sortie du moyen additionneur (26) qui a la fréquence prédéterminée.

3. Dispositif de suivi de piste selon la revendication 1 ou 2, dans lequel le capteur (1-5) transmet et reçoit des signaux optiques.

## Patentansprüche

1. Spurfolgevorrichtung zum Folgen einer Spur mit einem Aufnehmer (1-5) zum Senden eines auf ein Medium (6) mit einer Spur einfallenden Signals und zum Empfangen eines von diesem resultierenden Signals; einer Vorrichtung zum Bewegen des Aufnehmers (1-5) bezüglich der Spur entsprechend einem Antriebssignal, das in einer Spurservoschleife, die das resultierende Signal empfängt, erzeugt wird; einer Detektorvorrichtung (91, 9b), die das resultierende Signal empfängt, um ein Paar von Detektorausgängen mit einer Pegeldifferenz, die sich entsprechend einem Ablenkungsbetrag des Aufnehmers von der Spur ändert, zu bilden; und einer Addiervorrichtung (11) zum Bilden eines Summensignals entsprechend einer Summe der Pegel des Paares von Ausgängen; einer Störungserzeugungsvorrichtung (20) zum Einführen eines Störungssignals (21) einer vorgegebenen Frequenz in das Antriebssignal; und einer Störungsextraktionvorrichtung (14, 19) zum Extrahieren einer Komponente des Summensignals mit einer festen Beziehung zu der vorgegebenen Frequenz des Störungssignals, um ein Offsetsignal mit einem Pegel zu erzeugen, der sich mit der Ablenkung des Aufnehmers (1-5) ändert; gekennzeichnet durch eine Vorrichtung (26) zum Addieren des Offsetsignals und einer Differenz im Pegel zwischen dem Paar der Detektorausgänge, um ein Signal zu erzeugen, von dem das Antriebssignal abgeleitet wird.

2. Spurfolgevorrichtung nach Anspruch 1, wobei die Störungsextraktionsvorrichtung (14, 19) eine Vorrichtung (16) zum Invertieren wenigstens einer Komponente des Summensignals entsprechend einem instantanen Pegel einer Komponente eines Ausgangs der Addiervorrichtung (26) mit einer vorgegebenen Frequenz umfaßt.

3. Spurfolgevorrichtung nach Anspruch 1 oder 2, wobei der Aufnehmer (1-5) optische Signale sendet und empfängt.

FIG. 1

FIG. 2

FIG. 3

SHIFT OF OPTICAL AXIS

*FIG.* 4

*FIG.* 5